(19) Europäisches Patentamt
European Patent Office
Office européen des brevets

(11) **EP 4 738 292 A1**

(12) **EUROPEAN PATENT APPLICATION**
published in accordance with Art. 153(4) EPC

(43) Date of publication:
06.05.2026 Bulletin 2026/19

(21) Application number: 24947623.5

(22) Date of filing: 15.08.2024

(51) International Patent Classification (IPC):
*G06V 20/58* (2022.01)    *G06V 10/10* (2022.01)
*G06V 10/25* (2022.01)    *G06V 10/62* (2022.01)

(86) International application number:
PCT/CN2024/112231

(87) International publication number:
WO 2026/016240 (22.01.2026 Gazette 2026/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.07.2024 CN 202410972892

(71) Applicant: Guangzhou Xiaopeng Autopilot
Technology Co., Ltd.
Guangzhou, Guangdong 510000 (CN)

(72) Inventors:
• DENG, Huan
  Guangzhou, Guangdong 510000 (CN)
• DIAO, Pengfei
  Guangzhou, Guangdong 510000 (CN)
• LU, Di
  Guangzhou, Guangdong 510000 (CN)
• CHEN, Qi
  Guangzhou, Guangdong 510000 (CN)
• XIAO, Yao
  Guangzhou, Guangdong 510000 (CN)
• YANG, Fanfan
  Guangzhou, Guangdong 510000 (CN)
• SONG, Jiarong
  Guangzhou, Guangdong 510000 (CN)
• LI, Tingfei
  Guangzhou, Guangdong 510000 (CN)
• MU, Lewen
  Guangzhou, Guangdong 510000 (CN)
• YU, Fengning
  Guangzhou, Guangdong 510000 (CN)

(74) Representative: Ran, Handong et al
Maucher Jenkins
Seventh Floor Offices
Artillery House
11-19 Artillery Row
London SW1P 1RT (GB)

(54) **METHOD AND APPARATUS FOR DETECTING STATIONARY OBJECT, AND DEVICE, STORAGE MEDIUM AND VEHICLE**

(57) The present application relates to the technical field of object detection. Disclosed are a method and apparatus for detecting a stationary object, and a device, a storage medium and a vehicle. The method comprises: acquiring the current image frame collected by a camera, and identifying a camera observation object from the current image frame; associating the camera observation object with a current object detection box, and performing state prediction and update on the associated object detection box on the basis of a relative motion parameter of the camera observation object, wherein the current object detection box comprises a detection box created on the basis of historical observed objects; determining whether the state of the updated object detection box has converged; and when the state of the updated object detection box has converged, determining whether the updated object detection box is stationary. In the present application, an observation object is associated with an object detection box and a state is updated, such that whether the object detection box is stationary can be accurately determined by using the object detection box with a converged state.

obtaining a current frame image captured by a camera, and identifying a camera-observed target in the current frame image — S101

associating the camera-observed target with a current detection bounding box, and performing state prediction and update on an associated detection bounding box according to a relative motion parameter of the camera-observed target; wherein, the current detection bounding box comprises a detection frame created based on an observed historical target; — S102

determining whether a state of an updated detection bounding box has converged — S103

when the state of the updated detection bounding box has converged, determining whether the updated detection bounding box is stationary — S104

FIG. 1

**Description**

**CROSS-REFERENCE TO RELATED APPLICATIONS**

The present application claims priority to Chinese Patent Application No. 202410972892.5, filed on July 18, 2024 and entitled "Method for detecting a stationary target, apparatus, device, storage medium and vehicle therefor", which is incorporated herein by reference in its entirety.

**TECHNICAL FIELD**

The present application relates to the field of target detection technology, and in particular, to a method for detecting a stationary target, apparatus, device, storage medium and vehicle therefor.

**BACKGROUND**

Intelligent driving vehicles are equipped with various sensors such as cameras and radars. Based on data collected by the sensors, objects around the vehicle can be detected to avoid collisions. Stationary objects have a significant impact on vehicle movement and it needs to accurately detect those around the vehicle.

When detecting a stationary target, especially one at a long distance (for example, a distance of more than 100m), speed and distance measuring accuracy of cameras are not high, while radars often produce false detections of stationary targets. Some solutions integrate features of images from cameras and radar features, but data fusion requires a large amount of computation and has low processing efficiency.

**SUMMARY**

In view of this, the present application provides a method, apparatus, device, storage medium and vehicle for detecting a stationary target in order to address the issue of inaccurate detection of the stationary target.

According to a first aspect of the present application, a method for detecting a stationary target is provided. The method comprises:

    obtaining a current frame image captured by a camera, and identifying a camera-observed target in the current frame image;
    associating the camera-observed target with a current detection bounding box, and performing state prediction and update on the associated detection bounding box according to a relative motion parameter of the camera-observed target, wherein the current detection bounding box comprises a detection bounding box created based on a historically observed target;
    determining whether a state of the updated detection bounding box has converged; and
    when the state of the updated detection bounding box has converged, determining whether the updated detection bounding box is stationary.

In some optional implementations, the associating the camera-observed target with a current detection bounding box comprises:

    associating a first camera-observed target with the current detection bounding box, wherein the first camera-observed target is a camera-observed target corresponding to a most critical dynamic object;
    thereafter, associating a second camera-observed target with a detection bounding box currently not associated with the first camera-observed target, wherein the second camera-observed target is a camera-observed target other than the first camera-observed target; and
    creating a new detection bounding box for a second camera-observed target that fails to be associated with a detection bounding box.

In some optional implementations, the associating the camera-observed target with a current detection bounding box further comprises:

    in a case where the first camera-observed target fails to be associated with a detection bounding box, after creating a new detection bounding box for a second camera-observed target that fails to be associated with a detection bounding box, re-associating the first camera-observed target with a detection bounding box currently not associated with a camera-observed target; and

in a case where the first camera-observed target fails to be associated with a detection bounding box again, creating a new detection bounding box for the first camera-observed target.

In some optional implementations, the determining whether a state of the updated detection bounding box has converged comprises:

determining a first number of associations of the updated detection bounding box, wherein the first number of associations is the number of times that the updated detection bounding box is associated with a camera-observed target corresponding to a most critical dynamic object; and

in a case where the first number of associations is greater than a first threshold, determining that the state of the updated detection bounding box has converged, and/or

determining a second number of associations of the updated detection bounding box, wherein the second number of associations is the number of times that the updated detection bounding box is associated with a camera-observed target;

in a case where the second number of associations is greater than a second threshold, determining a covariance matrix between a relative speed and a relative depth corresponding to the updated detection bounding box; and

in a case where the covariance matrix satisfies a convergence condition, determining that the state of the updated detection bounding box has converged.

In some optional implementations, the covariance matrix is:

$$P(depth, speed) = \begin{bmatrix} P_{dd} & P_{ds} \\ P_{sd} & P_{ss} \end{bmatrix},$$

where *depth* denotes a relative depth observation, *speed* denotes a relative speed observation, *P(depth, speed)* denotes the covariance matrix between the relative speed and the relative depth, $P_{dd}$ denotes a variance of the relative depth observation, $P_{ss}$ denotes a variance of the relative speed observation, $P_{ds}$ denotes a covariance between the relative depth observation and the relative speed observation, $P_{sd}$ denotes a covariance between the relative speed observation and the relative depth observation; and

the convergence condition is:

$$\begin{cases} P_{dd} - P_{ds} * P_{sd}/P_{ss} < (k_1 * depth')^2 \\ P_{ss} - P_{sd} * P_{ds}/P_{dd} < k_2{}^2 \end{cases},$$

where *depth'* denotes a relative depth of the detection bounding box, $k_1$ and $k_2$ are both preset threshold parameters.

In some optional implementations, the determining whether the updated detection bounding box is stationary when the state of the updated detection bounding box has converged comprises:

in a case where the state of the updated detection bounding box has converged, determining that the updated detection bounding box is stationary if a relative speed of the updated detection bounding box is less than a current speed threshold, or

in a case where the state of the updated detection bounding box has converged, determining a normal distribution cumulative probability corresponding to an ego vehicle speed by using a negative value of the ego vehicle speed as a variable and using a relative speed of the updated detection bounding box as an expectation; and

in a case where the normal distribution cumulative probability is greater than a preset probability value, determining that the updated detection bounding box is stationary.

In some optional implementations, the normal distribution cumulative probability is:

$$F(x; \mu, \sigma) = \frac{1}{\sigma\sqrt{2\pi}} \int_{-\infty}^{x+\Delta v} exp\left(\frac{-(x-\mu)^2}{2\sigma^2}\right) dx,$$

where x denotes a negative value of the ego vehicle speed, $\Delta v$ denotes a preset speed difference, $\mu$ denotes a relative speed expectation, $\sigma$ denotes a relative speed standard deviation.

In some optional implementations, the method further comprises:

determining a radar-observed target currently identified by a radar, and identifying a stationary radar-observed target; and

associating the stationary radar-observed target with a current detection bounding box, and performing state prediction and update on the associated detection bounding box according to a relative motion parameter of the stationary radar-observed target.

In some optional implementations, the determining whether a state of the updated detection bounding box has converged comprises:

determining a third number of associations of the updated detection bounding box, wherein the third number of associations is the number of times that the updated detection bounding box is associated with the stationary radar-observed target; and in a case where the third number of associations is greater than a third threshold, determining that the state of the updated detection bounding box has converged; and

the determining whether the updated detection bounding box is stationary when the state of the updated detection bounding box has converged comprises:

in a case where the third number of associations that the updated detection bounding box is associated with the stationary radar-observed target is greater than the third threshold, determining that the updated detection bounding box is stationary.

In some optional implementations, the method further comprises:

deleting a detection bounding box meeting a failure condition,

wherein the failure condition comprises: a duration of a detection bounding box not being associated exceeding a first preset duration; or a target type of a detection bounding box being inconsistent with a target type of an associated observed target, and a duration of being inconsistent exceeding a second preset duration.

According to a second aspect of the present application, an apparatus for detecting a stationary target is provided. The apparatus comprises:

a target identification module configured to obtain a current frame image captured by a camera and identify a camera-observed target in the current frame image;

an association and update module configured to associate the camera-observed target with a current detection bounding box and perform state prediction and update on the associated detection bounding box according to a relative motion parameter of the camera-observed target, wherein the current detection bounding box comprises a detection bounding box created based on a historically observed target;

a convergence determination module configured to determine whether a state of an updated detection bounding box has converged; and

a detection module configured to determine whether the updated detection bounding box is stationary when the state of the updated detection bounding box has converged.

According to a third aspect of the present application, a computer device is provided. The device comprises: a memory and a processor in communication with each other, the memory having stored thereon computer instructions which, when executed by the processor, cause the processor to execute the method as described in the first aspect or any corresponding implementation thereof.

According to a fourth aspect of the present application, a computer-readable storage medium is provided. The computer-readable storage medium stores computer instructions which cause a computer to perform the method as described in the first aspect or any corresponding implementation thereof.

According to a fifth aspect of the present application, a vehicle is provided, comprising a vehicle controller configured to perform the method as described in the first aspect or any corresponding implementation thereof.

In the present application, an observed target captured by a camera is associated with a detection bounding box and a state update is performed. After multiple rounds of processing, the state of the detection bounding box has converged, allowing for a more accurate representation of the true state of the corresponding observed target even if the observation value of the observed target contains significant errors. This reduces the impact of observation errors, enabling a more accurate determination of whether the detection bounding box is stationary, providing good detection results for stationary targets at long distances, and achieving high accuracy and recall rates. When the method, apparatus, device, storage medium and vehicle of the present application are applied to autonomous vehicles, stationary objects such as obstacles in lanes can be accurately recognized, thereby enhancing the safety of autonomous vehicles. Camera-based visual detection of stationary targets is low in cost, does not require data fusion, and has low computation demand with high identification efficiency.

**BRIEF DESCRIPTION OF DRAWINGS**

In order to illustrate the technical solutions in the specific implementation methods or related technologies of the present application, the following is a brief introduction to the accompanying drawings needed in the descriptions of the specific implementation methods or related technologies. It will be appreciated that the accompanying drawings described below represent some implementation methods of the present application, and for those skilled in the art, it is possible to derive other drawings based on these without creative effort.

FIG. 1 is a schematic flowchart of one method for detecting a stationary target according to an embodiment of the present application.
FIG. 2 is a schematic flowchart of the other method for detecting a stationary target according to an embodiment of the present application.
FIG. 3 is a schematic diagram of a process of associating a camera-observed target according to an embodiment of the present application.
FIG. 4 is a schematic flowchart of another method for detecting a stationary target according to an embodiment of the present application.
FIG. 5 is a structural block diagram of an apparatus for detecting a stationary target according to an embodiment of the present application.
FIG. 6 is a schematic diagram of hardware structure of a computer device according to an embodiment of the present application.

**DESCRIPTION OF EMBODIMENTS**

In order to make the objectives, technical solutions, and advantages of the present application clearer, the technical solutions in the embodiment of the present application will be clearly and completely described below in conjunction with the accompanying drawings. It will be appreciated that the described embodiments are part of the embodiments of the present application, not all of the embodiments. Based on the embodiments in the preset application, all other embodiments obtained by those skilled in the art without involving an inventive step are included within the scope of the present application.

In the process of autonomous driving or assisted driving, a vehicle needs to detect an object around the vehicle by using an installed sensor such as a camera or a radar, in order to alert a driver to avoid it or avoid it automatically. Since a stationary object has a significant impact on safe driving of the vehicle, detecting the stationary object accurately is particularly important.

For example, during the autonomous driving process of vehicle A, another vehicle B is in front of vehicle A. If vehicle B temporarily stops in the middle of a lane due to a fault, a traffic accident, etc., a camera, a radar, and the like in vehicle A are required to be capable of detecting vehicle B in front and determining that vehicle B is currently in a stationary state, that is, vehicle B is a stationary target. Thus, vehicle A can automatically avoid vehicle B to prevent a collision. However, if vehicle A mistakenly perceives vehicle B as not stationary, for instance, vehicle B moving forward as well, vehicle A may fail to avoid vehicle B in time due to such an incorrect determination, resulting in a risk of collision.

In addition, when a sensor such as the camera or radar detects a state of a distant object, there is generally a large margin of error, making it difficult to accurately determine information such as a relative speed and a relative position of the distant object. If a distant stationary object can be accurately identified, vehicle A can avoid the stationary object in advance while driving at high speed in road conditions such as a highway, ensuring the safety of vehicle driving.

According to an embodiment of the present application, a method for detecting a stationary target is provided. It will be appreciated that the steps illustrated in the flowchart of the accompanying drawings may be performed by a computer system, for example through a set of computer-executable instructions. Furthermore, although the flowchart shows a logical order, in some cases, the steps illustrated or described may be executed in an order different from that described here.

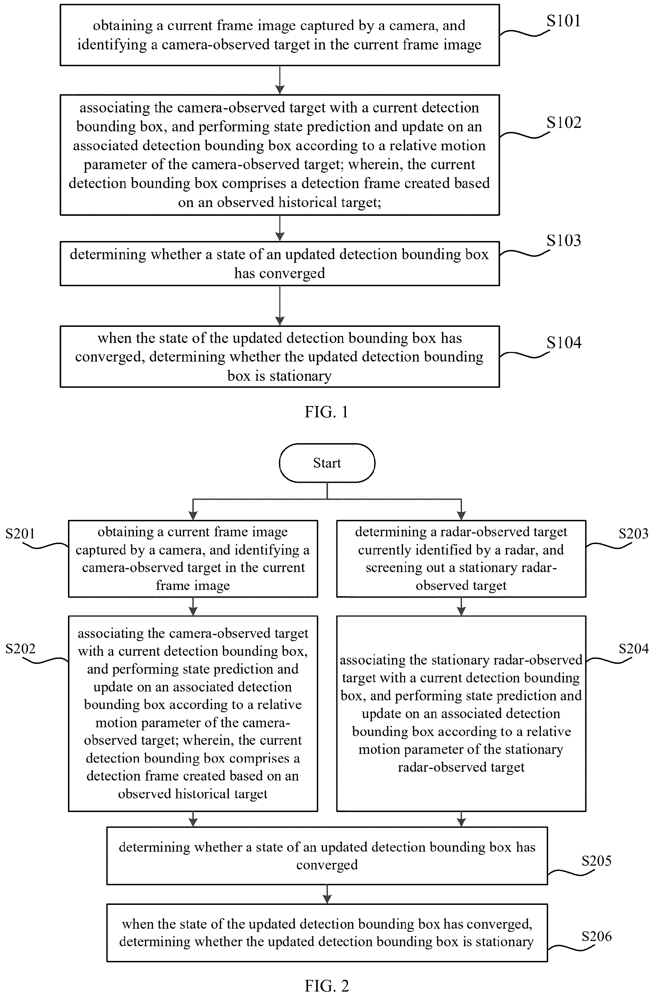

A method for detecting a stationary target is provided in the embodiment, which may be applied to a local terminal such as a vehicle controller, or to a server located on the network side, or to a distributed system on the network side, depending on the actual situation. FIG. 1 is a schematic flowchart of the method for detecting a stationary target according to the embodiment of the present application. As shown in FIG. 1, the method includes the following steps.

S101, obtaining a current frame image captured by a camera, and identifying a camera-observed target in the current frame image.

In the embodiment, when detecting a stationary target, the camera is used for real-time image capture. A frame of an image captured by the camera at the current moment is referred as the current frame image, which includes targets around the camera, and the targets observed by the camera is referred as the camera-observed target.

For example, if the camera is an onboard camera, it can real-time capture environmental images around the vehicle to generate a corresponding current frame image. By performing target detection on this current frame image, vehicles, pedestrians, and other targets in the current frame image may be identified as camera-observed targets. Some targets may be stationary targets, for example, a stationary target may be a vehicle, a pedestrian or an obstruction stopped in a lane, or a fallen rock in the lane, etc.

S102, associating the camera-observed target with a current detection bounding box, and performing state prediction and update on an associated detection bounding box according to a relative motion parameter of the camera-observed target, wherein the current detection bounding box comprises a bounding box created based on a historically observed target.

In the embodiment, when performing target detection, a bounding box corresponding to an observed target is created, which may serve as a detection bounding box. The detection bounding box corresponding to an initially observed target may be created. For example, based on a first frame image captured by the camera, observed targets therein may be identified, and an initial detection bounding box may be created for each observed target. Subsequently, these initial detection bounding boxes are to be used as a basis for associating them with the camera-observed targets.

In particular, after current camera-observed targets are determined, these camera-observed targets may be associated with the current detection bounding boxes to determine which detection bounding box a camera observed-targets is associated with. For example, the detection bounding box which the camera-observed target may be associated with may be determined by calculating an IOU (Intersection over Union) or size ratio between the camera-observed target and the detection bounding box. The current detection bounding box is a detection bounding box existing at the current moment, and the current detection bounding box specifically comprises a bounding box corresponding to a previously observed target.

Furthermore, each camera-observed target has certain relative motion parameters. If camera-observed target 1 is associated with detection bounding box A, then based on the relative motion parameters of camera-observed target 1, a state of detection bounding box A may be predicted, thereby allowing updates to its state. For example, the relative motion parameters may specifically include a relative speed (i.e., the relative speed between itself and the camera-observed target) and a relative depth (i.e., the relative depth between itself and the camera-observed target, also referred to as a relative distance). The state of detection bounding box A may be predicted and updated using methods such as Kalman filtering to update the relative position and relative speed of detection bounding box A.

The time update equation of Kalman filtering is:

$$\hat{x}_{\bar{k}} = A\hat{x}_{k-1} \qquad (1)$$

$$P_{\bar{k}} = AP_{k-1}A^T + Q \qquad (2)$$

The state update equation of Kalman filtering is:

$$K_k = \frac{P_{\bar{k}}H^T}{HP_{\bar{k}}H^T + R} \qquad (3)$$

$$\hat{x}_k = \hat{x}_{\bar{k}} + K_k(z_k - H\hat{x}_{\bar{k}}) \qquad (4)$$

$$P_k = (I - K_kH)P_{\bar{k}} \qquad (5)$$

Each parameter is explained as follows:
$\hat{x}_{k-1}$ and $\hat{x}_k$ respectively denote the posterior state estimates at time k-1 and time k, that is the updated result.

$\hat{x}_{\bar{k}}$ denotes the prior state estimate at time k, which is the result of the prediction equation.

$P_{k-1}$ and $P_k$ respectively denote the posterior estimation covariance at time k-1 and time k, which is one of the results of filtering.

$P_{\bar{k}}$ denotes the prior estimate covariance at time k, which is an intermediate computation result of the filtering.

$H$ denotes a transformation matrix from state variables to measurements (observations).

$z_k$ denotes an observed input value.

$K_k$ denotes a Kalman gain matrix.

*A* denotes a state transition matrix.

$A^T$ and $H^T$ respectively denote a transpose of matrix *A* and *H*.

*Q* denotes a process noise covariance matrix.

*R* denotes a measurement noise covariance.

*I* denotes an identity matrix.

For example, after creating an initial detection bounding box based on a first frame image, since the initial detection bounding box corresponds to the observed target on a one-to-one basis, the state of the initial detection bounding boxes may be predicted and updated based on the relative motion parameters of these observed targets; after identifying the camera-observed targets in a second frame image, these updated detection bounding boxes may be used as the current detection bounding boxes and associated with the camera-observed targets in the second frame image, that is, the second frame image is the current frame image, and the above step S102 is executed. Similarly, after identifying the camera-observed targets in a third frame image, the detection bounding boxes currently existing may also be determined, and the detection bounding boxes may be used as the current detection bounding boxes and associated with the camera-observed targets in the third frame image, that is, the third frame image is the current frame image, and the above step S102 is executed. Such a process is repeated in this way to achieve real-time association and updating of the detection bounding boxes.

S103, determining whether a state of an updated detection bounding box has converged.

In the embodiment, each time a current frame image is captured, the detection bounding box may be associated with a camera-observed target currently identified and updated accordingly. After multiple rounds of updates, the state of the detection bounding box tends to be stable, that is, the state of the detection bounding box has converged.

Taking state prediction of Kalman filtering on the detection bounding box as an example, the more times the detection bounding box is updated, the more stable its state tends to become. Therefore, whether the state of the detection bounding box has converged may be determined based on the number of times of updating the detection bounding box.

S104, determining whether the updated detection bounding box is stationary in a case where the state of the updated detection bounding box converges.

If the state of the detection bounding box has converged, it indicates that the state (position, speed, acceleration, etc.) of the detection bounding box tends to be stable. In this case, even if the camera-observed target contains a large error, for example, a large error in a speed observation of the camera-observed target, and the detection bounding box is updated with the speed observation, it can still be ensured that the speed of the detection bounding box is close to the real speed of the camera-observed target. In other words, a detection bounding box whose state has converged is stable, and is less affected by observation errors.

Therefore, the detection bounding box whose state has converged may accurately represent the status of the corresponding observed target, which may reduce the impact of observation errors, especially for long-distance target detection. It can minimize issues related to inaccurate measurements due to longer distance and larger errors, thus enabling accurate determination of whether the detection bounding box is stationary. If the detection bounding box is stationary, then the observed target associated with the detection bounding box is also stationary, and at this time the stationary detection bounding box may be sent to downstream modules for planning and control. For example, if the updated detection bounding box is stationary, a driving path of the vehicle may be controlled based on the stationary detection bounding box, such as controlling the vehicle's speed, acceleration, direction, etc.

The updated detection bounding box may be determined to be stationary based on the relative speed of the updated detection bounding box. For example, if the relative speed of the updated detection bounding box and a negative value of an ego vehicle speed satisfy a stationary determination condition, it may be determined that the updated detection bounding box is stationary.

The downstream module receives information that the state of the detection bounding box has converged and the state is stationary, and predicts the behavior and trajectory of the target, e.g., a target vehicle, to obtain the behavior and predicted trajectory of the target vehicle. Based on the behavior of the target vehicle and the predicted trajectory information, deceleration and obstacle avoidance control are performed on autonomous vehicles, thereby guaranteeing the safety of autonomous vehicles.

In the embodiment of the present application, the observed target detected by the camera and the detection bounding box are associated and state updating is performed. After multiple rounds of processing, the state of the detection bounding box converges, allowing for an accurate representation of the true state of the corresponding observed target even if an observation value of the observed target contains significant errors. This reduces the impact of observation errors, enabling more accurate determination of whether the detection bounding box is stationary, providing good detection results for long-distance stationary targets, and achieving high accuracy and recall rates. When the method, apparatus, device, storage medium and vehicle of the present application are applied to autonomous vehicles, a stationary object such as an obstacle in a lane can be accurately recognized, thereby enhancing the safety of autonomous vehicles. Camera-based visual detection of stationary targets is low in cost, does not require data fusion, and involves a small amount of computation with high identification efficiency.

A method for detecting a stationary target is provided in the embodiment, which may be applied to a local terminal such as a vehicle controller, or to a server located on the network side, or to a distributed system on the network side. FIG. 2 is a schematic flowchart of the method for detecting a stationary target according to the embodiment of the present application. As shown in FIG. 2, the process includes the following steps.

S201, obtaining a current frame image captured by a camera, and identifying a camera-observed target in the current frame image.

For details, please refer to step S101 of the embodiment shown in FIG. 1, which will not be described in detail herein.

S202, associating the camera-observed target with a current detection bounding box, and performing state prediction and update on an associated detection bounding box according to a relative motion parameter of the camera-observed target, wherein the current detection bounding box comprises a detection bounding box created based on a historically observed target.

For details, please refer to step S102 of the embodiment shown in FIG. 1, which will not be described in detail herein.

In some optional implementations, the aforementioned step S202 "associating the camera-observed target with a current detection bounding box" comprises the following steps A1 to A3.

A1, associating a first camera-observed target with the current detection bounding box, wherein the first camera-observed target is a camera-observed target corresponding to a most critical dynamic object.

A2, thereafter, associating a second camera-observed target with a detection bounding box currently not associated with the first camera-observed target, wherein the second camera-observed target is a camera-observed target other than the first camera-observed target.

A3, creating a new detection bounding box for a second camera-observed target that fails to be associated with a detection bounding box.

In autonomous driving scenarios, there exists a most critical dynamic object (MCDO) that affects vehicle driving. Since the first object in the vehicle's current lane poses the highest danger, it is generally considered the MCDO. After identifying multiple camera-observed targets in the current frame image, it may be determined which camera-observed target is a MCDO observed target. For ease of description, the camera-observed target corresponding to the MCDO is referred to as a first camera-observed target, while other camera-observed targets, i.e., those other than the first camera-observed target, are referred to as second camera-observed targets, that is, second camera-observed targets are a non-MCDO observed targets.

When associating a bounding box, the first camera-observed target related to the MCDO is first associated, which can increase the probability of the first camera-observed target being associated and avoid the risk of association failure due to conflicts with other camera-observed targets.

After associating the first camera-observed target, the remaining second camera-observed targets may then be associated. Specifically, a second camera-observed target is associated with a detection bounding box not currently associated with the first camera-observed target.

If the first camera-observed target is successfully associated with a certain detection bounding box, then the second camera-observed target cannot be associated with the successfully associated detection bounding box. If the association of the first camera-observed target fails, then the second camera-observed target may attempt to be associated with any detection bounding box.

If there is any second camera-observed target that fails to be associated with a detection bounding box, then a new detection bounding box for such second camera-observed target is created. If all of the second camera-observed targets are associated successfully, no additional processing needs to be performed on the second camera-observed targets.

In the embodiment, the camera-observed target corresponding to the MCDO is associated first, so that the camera-observed target corresponding to the MCDO can be associated and updated preferentially. As a result, the recall rate of the MCDO observed target can be improved, thereby increasing the safety of autonomous vehicles. A new detection bounding box is created for a second camera-observed target that fails to be associated with the detection bounding box, so that the detection rate of stationary targets can be improved. Furthermore, a new detection bounding box is created based on a camera-observed target without a radar, thereby avoiding the problem of a large number of incorrectly created detection bounding boxes caused by radar artifacts.

In some optional implementations, the aforementioned step S202 "associating the camera-observed target with a current detection bounding box" further comprises the following steps A4 to A5.

A4, in a case where the first camera-observed target fails to be associated with a detection bounding box, after creating a new detection bounding box for a second camera-observed target that fails to be associated with the detection bounding box, re-associating the first camera-observed target with a detection bounding box currently not associated with a camera-observed target.

A5, in a case where the first camera-observed target fails again to be associated with a detection bounding box, creating a new detection bounding box for the first camera-observed target.

In the embodiment, if the first camera-observed target fails to be associated with a detection bounding box, then a new detection bounding box is created for the first camera-observed target as well, similar to the aforementioned step A3. In order to improve the recall rate of MCDO detection, the first camera-observed target is re-associated.

Specifically, if in the aforementioned step A1, the first camera-observed target fails to be associated with a detection bounding box, after the aforementioned step A3 "creating a new detection bounding box for a second camera-observed target that fails to be associated with the detection bounding box" is performed, the first camera-observed target is associated again, that is, re-associating, with a detection bounding box currently not associated with a camera-observed target. If the first camera-observed target is associated successfully, state prediction and update is performed on the associated detection bounding box. If the first camera-observed target fails to be associated again, that is, the first camera-observed target fails again to be associated with a detection bounding box, a new detection bounding box is also created for the first camera-observed target.

Optionally, the method further comprises step A6.

A6, deleting a detection bounding box meeting a failure condition;

The failure condition comprises: a duration of a detection bounding box not being associated exceeding a first preset duration; or, a target type of a detection bounding box being inconsistent with a target type of an associated observed target, and a duration of this inconsistency exceeding a second preset duration.

In the embodiment of the present application, for a certain detection bounding box, if the duration for which the detection bounding box is not associated exceeds the first preset duration (for example, 300ms, 400ms, etc.), it indicates that the detection bounding box fails to be associated for a long time, and the detection bounding box may be deleted.

Alternatively, if a detection bounding box is associated with an observed target, but if the target type of the detection bounding box is inconsistent with the target type of the observed target associated therewith for a long time, that is, the duration when the target type of the detection bounding box is inconsistent with the target type of the observed target associated therewith exceeds the second preset duration (for example, 200ms, 300ms, etc.), it may also be considered that the association between the two is invalid, and the detection bounding box may also be deleted. For example, if the target type of a certain detection bounding box is "vehicle", but a target type of an observed-target associated therewith is "pedestrian", and if the target types of the two are inconsistent for a long time, the detection bounding box is deleted.

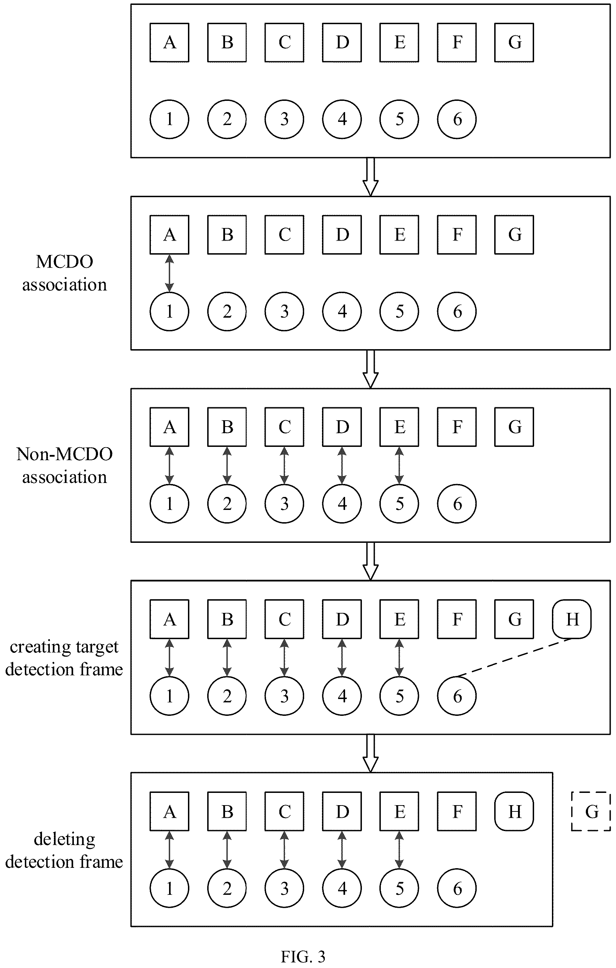

FIG 3 is a schematic diagram of a process of associating a camera-observed target. As shown in FIG. 3, currently there are seven detection bounding boxes, which are respectively detection bounding boxes A~G, and six camera-observed targets are identified in the current frame image, which are respectively camera-observed targets 1~6.

First, MCDO association is performed. As shown in FIG. 3, if camera-observed target 1 corresponds to MCDO, camera-observed target 1 is associated with a detection bounding box. If the IOU between camera-observed target 1 and detection bounding box A exceeds a threshold, the two may be associated. Subsequently, the state of detection bounding box A is predicted and updated based on the relative motion parameters of camera-observed target 1.

Afterwards, non-MCDO association is performed. As shown in FIG. 3, camera-observed targets 2~6 are all second camera-observed targets, and associations may be performed between these camera-observed targets and the remaining detection bounding boxes. As shown in FIG. 3, camera-observed targets 2, 3, 4, and 5 are associated with detection bounding boxes B, C, D, and E, respectively, while camera-observed target 6 fails to be associated.

Afterwards, a new detection bounding box may be created for the camera-observed target that fails to be associated. As shown in FIG. 3, based on the position, speed, acceleration, and other parameters of camera-observed target 6, a new detection bounding box H may be created.

Furthermore, if a certain detection bounding box meets the failure condition, the failed detection bounding box will be deleted. As shown in FIG. 3, if detection bounding box G has not been associated for a long time, it may be deleted. When the next frame image is captured, the camera-observed targets extracted therefrom will be used to associate with detection bounding boxes A, B, C, D, E, F, and H.

It should be noted that, in the embodiment, a detection bounding box may also be associated based on a detection result of a radar. If a certain detection bounding box is not associated with a camera-observed target but is successfully associated with the detection result of the radar, the detection bounding box is an associated detection bounding box. Only when the detection bounding box is not associated with a target observed by the camera or the radar for a long time, the detection bounding box is deleted.

In the embodiment, a second round of association and update is performed on the first camera-observed target corresponding to the MCDO, so that the recall rate of MCDO detection may be improved, avoiding missed detection of the MCDO observed target. The invalid detection bounding box is deleted in time, improving accuracy of target detection.

S203, determining a radar-observed target currently identified by a radar, and identifying a stationary radar-observed target.

Since camera detection is greatly affected by light rays, problems such as missed detection may exist. On this basis, in the embodiment, target detection is also performed in combination with the radar.

Specifically, based on radar data collected by the radar, a target observed by the radar, i.e., a radar-observed target, may be identified. The radar-observed target may specifically include a radar point cloud target, and tracking the radar point cloud target may generate a corresponding radar track target, and the radar track target may also serve as a radar-observed target.

With regard to each radar-observed target, the probability of it belonging to an obstacle may be determined, and with regard to a radar-observed target having a probability exceeding a threshold value, it may be preliminarily considered as stationary, and subsequently it is referred to as a stationary radar-observed target.

The radar particularly may be a millimeter wave radar, which does not require the use of expensive laser radars, thereby reducing hardware costs of autonomous vehicles. Moreover, camera detection and radar detection can operate in parallel without interfering with each other, and there is no need for data fusion, resulting in a small amount of computation with high processing efficiency.

S204, associating the stationary radar-observed target with a current detection bounding box, and performing state prediction and update on an associated detection bounding box according to a relative motion parameter of the stationary radar-observed target.

In the embodiment, similar to identifying the camera-observed target, after stationary radar-observed targets are determined, these stationary radar-observed targets are associated with current detection bounding boxes, and then state prediction and update may be performed on the associated detection bounding boxes, which will not be described in detail herein.

Since a radar-observed target generally does not differentiate a target type, there are useless targets in the identified stationary radar-observed targets, such as fences and trees by the roadside. The detection bounding box is created based on a camera-observed target. The detection bounding box based on vision is irrelevant to useless objects such as a fence and a tree. By associating the stationary radar-observed target with the current detection bounding box, useless targets identified by the radar may also be excluded.

It will be appreciated that a camera-observed target and a radar-observed target are independent. Therefore, for a certain detection bounding box, if it is associated with a camera-observed target, a state prediction and update may be performed based on the relative motion parameters of the camera-observed target. If the detection bounding box is also associated with a stationary radar-observed target, a state prediction and update can be performed again based on the relative motion parameters of the stationary radar-observed target.

S205, determining whether a state of an updated detection bounding box has converged.

For details, please refer to step S103 of the embodiment shown in FIG. 1, which will not be described in detail herein.

In some optional implementations, for a relatively important MCDO observed target, that is, the first camera-observed target, a convergence determination may be made specifically for the detection bounding box associated with the MCDO observed-target. Specifically, the aforementioned step S205 "determining whether a state of an updated detection bounding box has converged" may specifically comprise steps B1 to B2.

B1, determining a first number of associations of the updated detection bounding box, wherein the first number of associations is the number of times that the updated detection bounding box is associated with a camera-observed target corresponding to a most critical dynamic object.

B2, in a case where the first number of associations is greater than a first threshold, determining that the state of the updated detection bounding box has converged.

In the embodiment, as described above, the camera-observed targets include the first camera-observed target corresponding to the most critical driving object, as well as the second camera-observed targets other than the first camera-observed target. For any detection bounding box, if it is associated with the first camera-observed target, the number of times that the detection bounding box is associated with the camera-observed target corresponding to the most critical driving object may be counted, thus obtaining the first number of associations of the detection bounding box. For each frame image of the MCDO observed target associated with this detection bounding box, the first number of associations of the detection bounding box is incremented by one.

To ensure the accuracy of the first number of associations, the number of times of consecutive associations of the MCDO observed target may be counted, that is, the first number of associations is the number of times that the updated detection bounding box is continuously associated with the camera-observed target corresponding to the most critical driving object.

If the first number of associations is greater than the first threshold, it indicates that state prediction and update on the detection bounding box have been performed based on a relative motion parameter of the MCDO observed target over multiple moments. At this point, the state of the detection bounding box can more accurately represent the state of the MCDO observed target, so it can be determined that the state of the detection bounding box has converged.

Alternatively, for any detection bounding box, the number of times that the camera-observed target is associated may be counted, and the convergence is determined based on the number of times. Specifically, the aforementioned step S205 "determining whether a state of an updated detection bounding box has converged" may comprise steps B3 to B5.

B3, determining a second number of associations of the updated detection bounding box, wherein the second number of associations is the number of times that the updated detection bounding box is associated with a camera-observed target.

B4, in a case where the second number of associations is greater than a second threshold, determining a covariance matrix between a relative speed and a relative depth corresponding to the updated detection bounding box.

B5, in a case where the covariance matrix satisfies a convergence condition, determining that the state of the updated detection bounding box has converged.

In the embodiment, for at least some detection bounding boxes, the number of times that they are associated with the camera-observed targets may be counted, and the number of times is considered as the second number of associations of the detection bounding box. To avoid an incorrect determination, this second number of associations may specifically be the number of times that the updated detection bounding box is associated with the same camera-observed target. For example, IDs may be set for different camera-observed targets, and the second number of associations is the number of times that the updated detection bounding box is associated with the camera-observed targets corresponding to the same ID.

If the second number of associations is greater than the second threshold, it indicates that the detection bounding box tends to be stable with a large probability. In addition, in order to ensure accuracy of convergence determination, in the embodiment, the covariance matrix between the relative speed and the relative depth corresponding to the detection bounding box is also determined. Based on the covariance matrix, it is further determined that the state of the detection bounding box has converged.

The convergence condition of the covariance matrix is preset. If the second number of associations is greater than the second threshold, and the covariance matrix satisfies the convergence condition, then it is determined that the state of the detection bounding box has converged. For example, convergence may be determined based on a rank of the covariance matrix, or based on residuals.

For the detection bounding box associated with the MCDO observed target, convergence may also be determined again based on the aforementioned steps B3 to B5 to improve reliability of the determination result.

Optionally, the covariance matrix of the detection bounding box is:

$$P(depth, speed) = \begin{bmatrix} P_{dd} P_{ds} \\ P_{sd} P_{ss} \end{bmatrix},$$

where *depth* denotes a relative depth observation, *speed* denotes a relative speed observation, *P(depth, speed)* denotes the covariance matrix between the relative speed and the relative depth, $P_{dd}$ denotes a variance of the relative depth observation, $P_{ss}$ denotes a variance of the relative speed observation, $P_{ds}$ denotes a covariance between the relative depth observation and the relative speed observation, $P_{sd}$ denotes a covariance between the relative speed observation and the relative depth observation.

In the embodiment, for the current frame image captured by the camera, the relative depth and the relative speed of the camera-observed target may be determined, i.e., the relative depth observation *depth* and the relative speed observation *speed*. For example, the current frame image may be input to a Velocity Net, and based on the output of the Velocity Net, the relative depth and the relative speed of the camera-observed target may be determined. Based on the relative depth observation *depth* and the relative speed observation *speed* corresponding to the frame image, the covariance matrix between the relative speed and the relative depth may be obtained through calculation. The physical meanings of $P_{ds}$ and $P_{sd}$ are different, but the values of the two are generally the same.

In the embodiment, the preset convergence condition is:

$$\begin{cases} P_{dd} - P_{ds} * P_{sd}/P_{ss} < (k_1 * depth')^2 \\ P_{ss} - P_{sd} * P_{ds}/P_{dd} < k_2{}^2 \end{cases},$$

where *depth'* denotes a relative depth of the detection bounding box, that is, the relative depth predicted by the detection bounding box. $k_1$ and $k_2$ are both preset threshold parameters, which are preset super parameters.

After the covariance matrix of the detection bounding box is determined, it can be easily and quickly determined whether the above inequations are satisfied. If $P_{dd} - P_{ds} * P_{sd}/P_{ss} < (k_1 * depth')^2$ and $P_{ss} - P_{sd} * P_{ds}/P_{dd} < k_2^2$, then the covariance matrix satisfies the convergence condition, that is, the state of the detection bounding box has converged.

In the embodiment, by counting the first number of associations of the detection bounding box, the convergence of the detection bounding box associated with the MCDO observed target may be quickly determined, facilitating a quick determination of whether the corresponding detection bounding box is stationary. The convergence condition of the preset covariance matrix, based on the second number of associations and the covariance matrix of the detection bounding box, may accurately determine whether the convergence has occurred, effectively reducing the likelihood of incorrect determinations.

Optionally, based on a number of associations with a stationary radar-observed target, the convergence corresponding to the detection bounding box may also be determined. Specifically, the aforementioned step S205 "determining whether a state of an updated detection bounding box has converge" further comprises step B6.

B6, determining a third number of associations of the updated detection bounding box, wherein the third number of associations is the number of times that the updated detection bounding box is associated with the stationary radar-observed target; and in a case where the third number of associations is greater than a third threshold, determining that the state of the updated detection bounding box has converged.

In the embodiment, similar to the aforementioned process of determining the convergence of the detection bounding box based on the first number of associations, after determining the third number of associations that the detection bounding box is associated with the stationary radar-observed target, it may be determined whether the third number of associations is greater than the third threshold. If the third number of associations is greater than the third threshold, it may be determined that the state of the updated detection bounding box has converged.

The first threshold, the second threshold, and the third threshold may be the same or different, depending on the actual situation.

S206, when the state of the updated detection bounding box has converged, determining whether the updated detection bounding box is stationary in .

For details, please refer to step S104 of the embodiment shown in FIG. 1, which will not be described in detail herein.

In some optional implementations, the aforementioned step S206 "when the state of the updated detection bounding box has converged, determining whether the updated detection bounding box is stationary" comprises the following step C1.

C1, in a case where the state of the updated detection bounding box has converged, determining that the updated detection bounding box is stationary if a relative speed of the updated detection bounding box is less than a current speed threshold.

In the embodiment, if the observed target is stationary, its relative speed with respect to the vehicle should be a negative value of the ego vehicle speed. For example, if the speed of the vehicle is 30 m/s, the relative speed with respect to a stationary target should be -30 m/s. When the state of the detection bounding box has converged, a lower relative speed indicates that the relative speed is closer to ego vehicle speed, and thus the detection bounding box is more likely to be stationary.

Specifically, a corresponding speed threshold may be set based on the ego vehicle speed, which may be slightly greater than the negative value of the ego vehicle speed. If the relative speed of the detection bounding box is less than the current speed threshold, it may be considered that the relative speed of the detection bounding box is essentially the same as the negative value of the ego vehicle speed, allowing for a simple and quick determination that the detection bounding box is stationary.

For example, if the state of the detection bounding box associated with the MCDO observed target converges based on steps B1 to B2, then it may be further determined whether the detection bounding box associated with the MCDO observed target is stationary based on step C1.

Alternatively, the aforementioned step S206 "determining whether the updated detection bounding box is stationary in a case where the state of the updated detection bounding box converges" may further comprise the following steps C2 to C3.

C2, in a case where the state of the updated detection bounding box has converged, determining a normal distribution cumulative probability corresponding to the ego vehicle speed by using the negative value of the ego vehicle speed as a variable and using the relative speed of the updated detection bounding box as an expectation.

In the embodiment, for the detection bounding box whose state has converged, the relative speed of the detection bounding box may be determined, and the ego vehicle speed may also be determined, which for example could be the speed of an autonomous vehicle. Furthermore, using the negative value of the ego vehicle speed as the variable and the relative speed of the detection bounding box as the expectation, a probability density function of the normal distribution cumulative probability is constructed, thereby determining the normal distribution cumulative probability corresponding to the ego vehicle speed.

Optionally, the normal distribution cumulative probability $F(x; \mu, \sigma)$ is:

$$F(x;\mu,\sigma) = \frac{1}{\sigma\sqrt{2\pi}} \int_{-\infty}^{x+\Delta v} exp\left(\frac{-(x-\mu)^2}{2\sigma^2}\right) dx,$$

where x denotes a negative value of the ego vehicle speed, $\Delta v$ denotes a preset speed difference, $\mu$ denotes a relative speed expectation, $\sigma$ denotes a relative speed standard deviation.

In the embodiment, the speed difference $\Delta v$ is preset, which may be dynamically adjusted based on actual situation. After detecting the ego vehicle speed *v*, it can take the negative value of the ego vehicle speed v as the variable *x*,

that is $x = -v$. Furthermore, after determining the relative speed *speed'* of the detection bounding box, it can take this relative speed *speed'* as the expectation $\mu$, and based on the relative speed observations from multiple frames, the relative speed standard deviation $\sigma$ is obtained through calculation. It can be understood that the variance of the relative speed $\sigma^2$ is also the variance $P_{ss}$ in the covariance matrix.

C3, in a case where the normal distribution cumulative probability is greater than a preset probability value, determining that the updated detection bounding box is stationary.

In the embodiment, a probability value for determining whether a target is stationary is preset, i.e., the preset probability value. The preset probability value is specifically determined based on the relative speed standard deviation $\sigma$. If the normal distribution cumulative probability $F(x; \mu, \sigma)$ corresponding to the negative value of the ego vehicle speed $x$ is greater than the preset probability value (for example, 0.6~0.8), then it indicates that x is close to the relative speed $\mu$, and therefore it may be determined that the detection bounding box is stationary.

Whether the target is stationary is determined based on the normal distribution cumulative probability, thereby improving detection accuracy of a stationary target and avoiding some moving targets from being determined as stationary and autonomous vehicles from abnormally decelerating.

Optionally, for the radar-observed target, it may be simply determined whether the associated detection bounding box is stationary. Specifically, the aforementioned step "when the state of the updated detection bounding box has converged, determining whether the updated detection bounding box is stationary" may include step C4.

C4, in a case where the third number of associations that the updated detection bounding box is associated with the stationary radar-observed target is greater than the third threshold, it is determined that the updated detection bounding box is stationary.

In the embodiment, if a certain detection bounding box is associated with a stationary radar-observed target, and the third number of associations of associating the stationary radar-observed target exceeds the third threshold, since the radar may generally detect stationary targets with high accuracy, it may be directly determined that the detection bounding box is stationary when the state of the detection bounding box has converged.

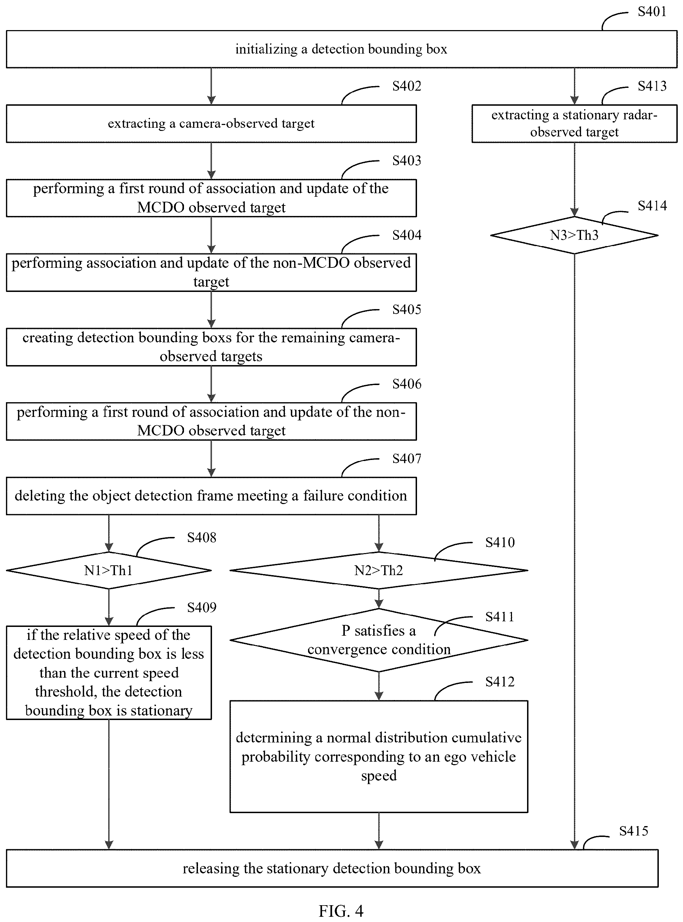

FIG. 4 is a detailed flowchart of the method for detecting the stationary target, integrating camera and radar detection for stationary targets. As shown in FIG. 4, the method includes the following steps.

S401, initializing a detection bounding box.

For example, an initial detection bounding box is created for an observed target captured by a camera, and a Kalman filtering state prediction is preformed to obtain an updated detection bounding box.

S402, extracting a camera-observed target.

For example, a current frame image captured by the camera is obtained, and the camera-observed target in the current frame image is identified, which specifically includes an MCDO observed target and a non-MCDO observed target.

S403, performing a first round of association and update of the MCDO observed target.

S404, performing association and update of the non-MCDO observed target.

S405, creating detection bounding boxes for the remaining camera-observed targets.

S406, performing a first round of association and update of the non-MCDO observed target.

S407, deleting the detection bounding box meeting a failure condition.

For details about the process from step S403 to S407, reference may be made to related descriptions of the aforementioned steps A1 to A6, which will not be described in detail herein.

S408, determining whether a first number of associations N1 is greater than a first threshold Th1. If N1 > Th1, it indicates that the state of the detection bounding box has converged, and the subsequent step S409 is to be executed.

After step S403, if the MCDO observed target is successfully associated, step S408 may be executed.

S409, if the relative speed of the detection bounding box is less than the current speed threshold, the detection bounding box is stationary. After that, proceed to the subsequent step S415.

Reference may be made to the relevant description of step C1, which will not be described in detail herein.

S410, determining whether a second number of associations N2 is greater than a second threshold Th2. If N2 > Th2, then the subsequent step S411 is to be executed.

S411, check whether a covariance matrix P satisfies a convergence condition. If the covariance matrix P satisfies the convergence condition, it indicates that the state of the detection bounding box has converged, then the subsequent step S412 is to be executed.

S412, determining a normal distribution cumulative probability corresponding to an ego vehicle speed. If the normal distribution cumulative probability is greater than the preset probability value, it is determined that the detection bounding box is stationary. Afterwards, the subsequent step S415 is to be executed.

Reference may be made to the relevant description of steps C2 to C3, which will not be described in detail herein.

S413, extracting a stationary radar-observed target.

S414, determining whether a third number of associations N3 is greater than a third threshold Th3. If N3 > Th3, it is directly determined that the detection bounding box is stationary and the subsequent Step S415 is to be executed.

S415, releasing the stationary detection bounding box.

For example, the stationary detection bounding box may be released downstream for planning control based on the stationary detection bounding box.

The method for detecting the stationary target is provided in the embodiment of the present application, which adopts the camera to create the detection bounding box, performs association and update on the detection bounding box in combination with the camera and radar, and determines whether the target is stationary. The method has a high precision rate for detecting stationary targets, effectively avoiding the problem of missed detections of stationary vehicle targets caused by missed detections of long-distance camera and radar tracks.

An apparatus for detecting a stationary target is provided in the embodiment, which is used to implement the aforementioned embodiments and optional implementations, and will not be described in detail herein. As used below, the term "module" may be a combination of software and/or hardware that achieves a predetermined function. Although the device described in the following embodiments is preferably implemented in software, it is also possible and conceived to be implemented in hardware or a combination of software and hardware.

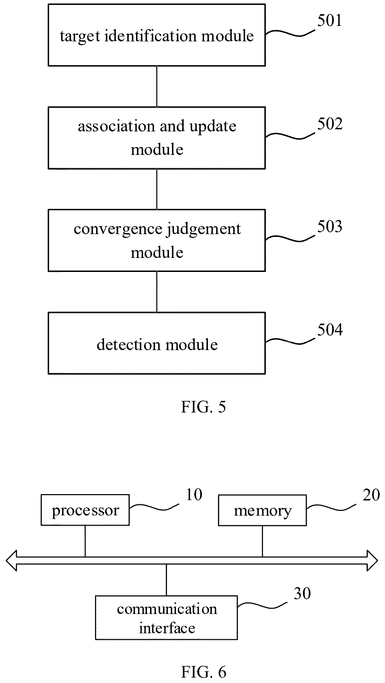

According to an embodiment of the present application, an apparatus for detecting a stationary target is provided. As shown in FIG. 5, the apparatus comprises:

a target identification module 501 configured to obtain a current frame image captured by a camera and identify a camera-observed target in the current frame image;

an association and update module 502 configured to associate the camera-observed target with a current detection bounding box and perform state prediction and update on the associated detection bounding box according to a relative motion parameter of the camera-observed target, wherein the current detection bounding box comprises a bounding box created based on a historically observed target;

a convergence determination module 503 configured to determine whether a state of the updated detection bounding box has converged; and

a detection module 504 configured to determine whether the updated detection bounding box is stationary when the state of the updated detection bounding box has converged.

In some optional implementations, the association and update module 502 associates the camera-observed target with the current detection bounding box, comprising:

associating a first camera-observed target with the current detection bounding box, wherein the first camera-observed target is a camera-observed target corresponding to a most critical dynamic object;

thereafter, associating a second camera-observed target with a detection bounding box currently not associated with the first camera-observed target, wherein the second camera-observed target is a camera-observed target other than the first camera-observed target; and

creating a new detection bounding box for a second camera-observed target that fails to be associated with a detection bounding box.

In some optional implementations, the association and update module 502 associates the camera-observed target with the current detection bounding box, further comprising:

in a case where the first camera-observed target fails to be associated with a detection bounding box, after creating a new detection bounding box for a second camera-observed target that fails to be associated with a detection bounding box, re-associating the first camera-observed target with a detection bounding box currently not associated with a camera-observed target; and

in a case where the first camera-observed target fails to be associated with a detection bounding box again, creating a new detection bounding box for the first camera-observed target.

In some optional implementations, the convergence determination module 503 determines whether a state of an updated detection bounding box has converged, comprising:

determining a first number of associations of the updated detection bounding box, wherein the first number of associations is the number of times that the updated detection bounding box is associated with a camera-observed target corresponding to a most critical dynamic object; and

in a case where the first number of associations is greater than a first threshold, determining that the state of the updated detection bounding box has converged, and/or

determining a second number of associations of the updated detection bounding box, wherein the second number of associations is the number of times that the updated detection bounding box is associated with a camera-observed target;

in a case where the second number of associations is greater than a second threshold, determining that a covariance matrix between a relative speed and a relative depth corresponding to the updated detection bounding box; and in a case where the covariance matrix satisfies a convergence condition, determining that the state of the updated detection bounding box has converged.

In some optional implementations, the covariance matrix is:

$$P(depth, speed) = \begin{bmatrix} P_{dd} P_{ds} \\ P_{sd} P_{ss} \end{bmatrix},$$

where *depth* denotes a relative depth observation, *speed* denotes a relative speed observation, *P*(*depth, speed*) denotes the covariance matrix between the relative speed and the relative depth, $P_{dd}$ denotes a variance of the relative depth observation, $P_{ss}$ denotes a variance of the relative speed observation, $P_{ds}$ denotes a covariance between the relative depth observation and the relative speed observation, $P_{sd}$ denotes a covariance between the relative speed observation and the relative depth observation; and
the convergence condition is:

$$\begin{cases} P_{dd} - P_{ds} * P_{sd}/P_{ss} < (k_1 * depth')^2 \\ P_{ss} - P_{sd} * P_{ds}/P_{dd} < k_2{}^2 \end{cases},$$

where *depth'* denotes a relative depth of the detection bounding box, $k_1$ and $k_2$ are both preset threshold parameters.

In some optional implementations, the detection module 504 determines whether the updated detection bounding box is stationary when the state of the updated detection bounding box has converged, comprising:

in a case where the state of the updated detection bounding box has converged, determining that the updated detection bounding box is stationary if a relative speed of the updated detection bounding box is less than a current speed threshold, or
in a case where the state of the updated detection bounding box has converged, determining a normal distribution cumulative probability corresponding to an ego vehicle speed by using a negative value of the ego vehicle speed as a variable and using a relative speed of the updated detection bounding box as an expectation; and
in a case where the normal distribution cumulative probability is greater than a preset probability value, determining that the updated detection bounding box is stationary.

In some optional implementations, the normal distribution cumulative probability is:

$$F(x; \mu, \sigma) = \frac{1}{\sigma\sqrt{2\pi}} \int_{-\infty}^{x+\Delta v} exp\left(\frac{-(x-\mu)^2}{2\sigma^2}\right) dx,$$

where *x* denotes a negative value of the ego vehicle speed, $\Delta v$ denotes a preset speed difference, $\mu$ denotes a relative speed expectation, $\sigma$ denotes a relative speed standard deviation.

In some optional implementations, the target identification module 501 is further configured to determine a radar-observed target currently identified by a radar, and identify a stationary radar-observed target.
In some optional implementations, the association and update module 502 is further configured to associate the stationary radar-observed target with a current detection bounding box, and perform state prediction and update on the associated detection bounding box according to a relative motion parameter of the stationary radar-observed target.
In some optional implementations, the convergence determination module 503 is configured to determine whether a state of the updated detection bounding box has converged, comprising:

determining a third number of associations of the updated detection bounding box, wherein the third number of associations is the number of times that the updated detection bounding box is associated with the stationary radar-observed target; and in a case where the third number of associations is greater than a third threshold, determining that the state of the updated detection bounding box has converged; and
the detection module 504 configured to determine whether the updated detection bounding box is stationary in a case where the state of the updated detection bounding box has converged, comprising:
in a case where a third number of associations that the updated detection bounding box is associated with the stationary radar-observed target is greater than a third threshold, determining that the updated detection bounding box is stationary.

In some optional implementations, the association and update module 502 is further configured to:

delete a detection bounding box meeting a failure condition,
wherein the failure condition comprises: a duration of a detection bounding box not being associated exceeding a first preset duration; or a target type of a detection bounding box being inconsistent with a target type of an associated observed target, and a duration of being inconsistent exceeding a second preset duration.

Future functional descriptions of the aforementioned modules and units are the same as those of the aforementioned corresponding embodiments, which will not be described in detail herein.

The apparatus for detecting a stationary target in the embodiment is presented in the form of a functional unit, and the unit herein refers to an ASIC (Application Specific Integrated Circuit), including a processor that executes one or more software or fixed programs and a memory, and/or other devices that may provide the aforementioned functions.

In the embodiment of the present application, a vehicle is provided, comprising a vehicle controller configured to perform the method for detecting a stationary target provided by any one of the aforementioned embodiments.

In the embodiment of the present application, a computer device is provided, comprising the apparatus for detecting a stationary target as shown in FIG. 5. For example, the computer device may be a vehicle controller.

Referring to FIG. 6, which is a schematic diagram of hardware structure of a computer device according to the embodiment of the present application, as shown, the computer device comprises: one or more processors 10, a memory 20, and an interface for connecting various components, including high-speed interfaces and low-speed interfaces. Various components are interconnected and communicate with each other using different buses, and they may be installed on a common motherboard or installed in other ways as needed. The processor may execute instructions within the computer device, including instructions stored in the memory or on the memory to display graphical information of the GUI on an external input/output device (for example, a display device coupled to the interface). In some optional implementations, if needed, multiple processors and/or multiple buses may be used with multiple memories. Similarly, multiple computer devices may be connected, with each device providing part of the necessary operations (for example, as a server array, a set of blade servers, or a multiprocessor system). FIG. 6 takes one processor 10 as an example.

The processor 10 may be a central processing unit, a network processor, or a combination thereof. The processor 10 may further include a hardware chip. The aforementioned hardware chip may be an application-specific integrated circuit, a programmable logic device or a combination thereof, and the aforementioned programmable logic device may be a complex programmable logic device, a field programmable logic gate array, a universal array logic or any combination thereof.

The memory 20 stores instructions executable by the at least one processor 10, so that the at least one processor 10 executes the method shown in the aforementioned embodiments.

The memory 20 may comprise a program storage area and a data storage area, wherein the program storage area may store an operating system and an application program required by at least one function, and the storage data area may store data created according to use of the computer device, and the like. In addition, the memory 20 may include a high-speed random access memory, and can further include a non-transient memory, for example, at least one magnetic disk storage device, a flash memory device, or other non-transient solid-state storage devices. In some optional implementations, the memory 20 may optionally include a storage device that is remotely located relative to the processor 10, and these remote storage devices may be connected to the computer device over a network. Examples of such networks include, but are not limited to, the Internet, intranets, local area networks, mobile communication networks, and combinations thereof.

The memory 20 may include a volatile memory, for example, a random access memory. The memory may also include a non-volatile memory, for example, a flash memory, a hard disk, or a solid state hard disk. The memory 20 may also include a combination of the aforementioned types of memories.

The computer device further comprises a communication interface 30 for the computer device to communicate with other devices or communication networks.

Embodiments of the present application further provide a computer-readable storage medium. The method according to the embodiments of the present application may be implemented in hardware or firmware, or may be recorded on a storage medium, or may be implemented by downloading raw data stored in a remote storage medium or a non-temporary machine-readable storage medium over a network and then stored in local storage media as computer code, thus allowing the described method to be stored as software processes on storage media using general computers, dedicated processors, or programmable or dedicated hardware. The storage medium may be a magnetic disk, an optical disk, a read-only memory, a random access memory, a flash memory, a hard disk, or a solid-state disk. Optionally, the storage medium may further include a combination of the aforementioned types of memories. It will be appreciated that the computer, processor, microcontroller, or programmable hardware includes storage components that may store or receive software or computer code, and when the software or computer code is accessed and executed by the computer, processor, or hardware, the method illustrated in the above embodiment is realized.

A part of the present application may be provided as a computer program product, such as computer program instructions, which when executed by a computer, through the operation of the computer, may invoke or provide methods and/or technical solutions according to the present application. Those skilled in the art will understand that the form of the presence of computer program instructions in computer-readable media includes but is not limited to source files, executable files, installation package files, etc. Correspondingly, ways in which computer program instructions are executed by the computer include but are not limited to: the computer executing the instructions directly, or the computer compiling the instructions before executing the corresponding compiled program, or the computer reading and executing the instructions, or the computer reading and installing the instructions before executing the corresponding installed program. Here, the computer-readable media may be any available computer-readable storage media or communication media that is accessible to the computer.

Although the embodiments of the present application are described in conjunction with the accompanying drawings, those skilled in the art may make various modifications and variations without departing from the concept of the present application, and such modifications and variations fall within the scope claimed by the claims.

**Claims**

1. A method for detecting a stationary target, **characterized in that** the method comprises:

   obtaining a current frame image captured by a camera, and identifying a camera-observed target in the current frame image;
   associating the camera-observed target with a current detection bounding box, and performing state prediction and update on the associated detection bounding box according to a relative motion parameter of the camera-observed target, wherein the current detection bounding box comprises a detection bounding box created based on a historically observed target;
   determining whether a state of the updated detection bounding box has converged; and
   when the state of the updated detection bounding box has converged, determining whether the updated detection bounding box is stationary.

2. The method according to claim 1, wherein the associating the camera-observed target with a current detection bounding box comprises:

   associating a first camera-observed target with the current detection bounding box, wherein the first camera-observed target is a camera-observed target corresponding to a most critical dynamic object;
   thereafter, associating a second camera-observed target with a detection bounding box currently not associated with the first camera-observed target, wherein the second camera-observed target is a camera-observed target other than the first camera-observed target; and
   creating a new detection bounding box for a second camera-observed target that fails to be associated with a detection bounding box.

3. The method according to claim 2, wherein the associating the camera-observed target with a current detection bounding box further comprises:

   in a case where the first camera-observed target fails to be associated with a detection bounding box, after creating a new detection bounding box for a second camera-observed target that fails to be associated with a detection bounding box, re-associating the first camera-observed target with a detection bounding box currently not associated with a camera-observed target; and
   in a case where the first camera-observed target fails to be associated with a detection bounding box again, creating a new detection bounding box for the first camera-observed target.

4. The method according to claim 1, wherein the determining whether a state of the updated detection bounding box has converged comprises:

   determining a first number of associations of the updated detection bounding box, wherein the first number of associations is the number of times that the updated detection bounding box is associated with a camera-observed target corresponding to a most critical dynamic object; and

in a case where the first number of associations is greater than a first threshold, determining that the state of the updated detection bounding box has converged,

and/or

determining a second number of associations of the updated detection bounding box, wherein the second number of associations is the number of times that the updated detection bounding box is associated with a camera-observed target;

in a case where the second number of associations is greater than a second threshold, determining a covariance matrix between a relative speed and a relative depth corresponding to the updated detection bounding box; and

in a case where the covariance matrix satisfies a convergence condition, determining that the state of the updated detection bounding box has converged.

5. The method according to claim 4, wherein the covariance matrix is:

$$P(depth, speed) = \begin{bmatrix} P_{dd} P_{ds} \\ P_{sd} P_{ss} \end{bmatrix},$$

where *depth* denotes a relative depth observation, *speed* denotes a relative speed observation, $P(depth, speed)$ denotes the covariance matrix between the relative speed and the relative depth, $P_{dd}$ denotes a variance of the relative depth observation, $P_{ss}$ denotes a variance of the relative speed observation, $P_{ds}$ denotes a covariance between the relative depth observation and the relative speed observation, $P_{sd}$ denotes a covariance between the relative speed observation and the relative depth observation; and

the convergence condition is:

$$\begin{cases} P_{dd} - P_{ds} * P_{sd}/P_{ss} < (k_1 * depth')^2 \\ P_{ss} - P_{sd} * P_{ds}/P_{dd} < k_2{}^2 \end{cases},$$

where *depth'* denotes a relative depth of the detection bounding box, $k_1$ and $k_2$ are both preset threshold parameters.

6. The method according to claim 1, wherein the determining whether the updated detection bounding box is stationary when the state of the updated detection bounding box has converged comprises:

in a case where the state of the updated detection bounding box has converged, determining that the updated detection bounding box is stationary if a relative speed of the updated detection bounding box is less than a current speed threshold,

or

in a case where the state of the updated detection bounding box has converged, determining a normal distribution cumulative probability corresponding to an ego vehicle speed by using a negative value of the ego vehicle speed as a variable and using a relative speed of the updated detection bounding box as an expectation; and

in a case where the normal distribution cumulative probability is greater than a preset probability value, determining that the updated detection bounding box is stationary.

7. The method according to claim 6, wherein the normal distribution cumulative probability is:

$$F(x; \mu, \sigma) = \frac{1}{\sigma\sqrt{2\pi}} \int_{-\infty}^{x+\Delta v} exp\left(\frac{-(x-\mu)^2}{2\sigma^2}\right) dx,$$

where *x* denotes a negative value of the ego vehicle speed, $\Delta v$ denotes a preset speed difference, $\mu$ denotes a relative speed expectation, $\sigma$ denotes a relative speed standard deviation.

8. The method according to claim 1, wherein the method further comprises:

determining a radar-observed target currently identified by a radar, and identifying a stationary radar-observed target; and

associating the stationary radar-observed target with a current detection bounding box, and performing state prediction and update on the associated detection bounding box according to a relative motion parameter of the stationary radar-observed target.

9. The method according to claim 8, wherein:
the determining whether a state of the updated detection bounding box has converged comprises:

determining a third number of associations of the updated detection bounding box, wherein the third number of associations is the number of times that the updated detection bounding box is associated with the stationary radar-observed target; and in a case where the third number of associations is greater than a third threshold, determining that the state of the updated detection bounding box has converged; and
the determining whether the updated detection bounding box is stationary in a case where the state of the updated detection bounding box has converged comprises:
in a case where the third number of associations that the updated detection bounding box is associated with the stationary radar-observed target is greater than the third threshold, determining that the updated detection bounding box is stationary.

10. The method according to claim 1, wherein the method further comprises:

deleting a detection bounding box meeting a failure condition,
wherein the failure condition comprises: a duration of a detection bounding box not being associated exceeding a first preset duration; or a target type of a detection bounding box being inconsistent with a target type of an associated observed target and a duration of being inconsistent exceeding a second preset duration.

11. An apparatus for detecting a stationary target, **characterized in that**, the apparatus comprises:

a target identification module configured to obtain a current frame image captured by a camera and identify a camera-observed target in the current frame image;
an association and update module configured to associate the camera-observed target with a current detection bounding box and perform state prediction and update on the associated detection bounding box according to a relative motion parameter of the camera-observed target, wherein the current detection bounding box comprises a bounding box created based on a historically observed target;
a convergence determination module configured to determine whether a state of the updated detection bounding box has converged; and
a detection module configured to determine whether the updated detection bounding box is stationary in a case where the state of the updated detection bounding box has converged.

12. A computer device, **characterized in that**, the device comprises:
a memory and a processor in communication with each other, the memory having stored thereon computer instructions which, when executed by the processor, cause the processor to execute the method according to any of claims 1-10.

13. A computer-readable storage medium having stored thereon computer instructions which cause a computer to perform the method according to any of claims 1-10.

14. A vehicle, comprising a vehicle controller configured to perform the method according to any of claims 1-10.

| obtaining a current frame image captured by a camera, and identifying a camera-observed target in the current frame image | S101 |

| associating the camera-observed target with a current detection bounding box, and performing state prediction and update on an associated detection bounding box according to a relative motion parameter of the camera-observed target; wherein, the current detection bounding box comprises a detection frame created based on an observed historical target; | S102 |

| determining whether a state of an updated detection bounding box has converged | S103 |

| when the state of the updated detection bounding box has converged, determining whether the updated detection bounding box is stationary | S104 |

FIG. 1

Start

S201 — obtaining a current frame image captured by a camera, and identifying a camera-observed target in the current frame image

S203 — determining a radar-observed target currently identified by a radar, and screening out a stationary radar-observed target

S202 — associating the camera-observed target with a current detection bounding box, and performing state prediction and update on an associated detection bounding box according to a relative motion parameter of the camera-observed target; wherein, the current detection bounding box comprises a detection frame created based on an observed historical target

S204 — associating the stationary radar-observed target with a current detection bounding box, and performing state prediction and update on an associated detection bounding box according to a relative motion parameter of the stationary radar-observed target

S205 — determining whether a state of an updated detection bounding box has converged

S206 — when the state of the updated detection bounding box has converged, determining whether the updated detection bounding box is stationary

FIG. 2

FIG. 3

S401

initializing a detection bounding box

S402

extracting a camera-observed target

S413

extracting a stationary radar-observed target

S403

performing a first round of association and update of the MCDO observed target

S404

performing association and update of the non-MCDO observed target

S414

N3>Th3

S405

creating detection bounding boxs for the remaining camera-observed targets

S406

performing a first round of association and update of the non-MCDO observed target

S407

deleting the object detection frame meeting a failure condition

S408

N1>Th1

S410

N2>Th2

S409

if the relative speed of the detection bounding box is less than the current speed threshold, the detection bounding box is stationary

S411

P satisfies a convergence condition

S412

determining a normal distribution cumulative probability corresponding to an ego vehicle speed

S415

releasing the stationary detection bounding box

FIG. 4

target identification module — 501

association and update module — 502

convergence judgement module — 503

detection module — 504

FIG. 5

processor — 10    memory — 20

communication interface — 30

FIG. 6

## INTERNATIONAL SEARCH REPORT

| | International application No. |
|---|---|
| | **PCT/CN2024/112231** |

**A.    CLASSIFICATION OF SUBJECT MATTER**

G06V 20/58(2022.01)i;   G06V 10/10(2022.01)i;   G06V 10/25(2022.01)i;   G06V 10/62(2022.01)i

According to International Patent Classification (IPC) or to both national classification and IPC

**B.    FIELDS SEARCHED**

Minimum documentation searched (classification system followed by classification symbols)

IPC：G06V

Documentation searched other than minimum documentation to the extent that such documents are included in the fields searched

Electronic data base consulted during the international search (name of data base and, where practicable, search terms used)

VEN, CNTXT, ENTXT, IEEE, CNKI, 百度, BAIDU: 检测框, 判断, 静止, 关联, 次数, 收敛, 目标, 观测, 识别, 预测, 状态, 更新, frame, detect, static, correlation, times, convergence, object, target, observe, recognition, prediction, status, update

**C.    DOCUMENTS CONSIDERED TO BE RELEVANT**

| Category* | Citation of document, with indication, where appropriate, of the relevant passages | Relevant to claim No. |
|---|---|---|
| Y | CN 116863752 A (GOERTEK TECHNOLOGY CO., LTD.) 10 October 2023 (2023-10-10) description, paragraphs [0051]-[0106] | 1-3, 6-8, 10-14 |
| Y | CN 118015590 A (BEIJING INSTITUTE OF SPACE LAUNCH TECHNOLOGY) 10 May 2024 (2024-05-10) description, paragraphs [0057]-[0140] | 1-3, 6-8, 10-14 |
| A | CN 114724093 A (SHENZHEN JIESHUN SCIENCE AND TECHNOLOGY INDUSTRY CO., LTD.) 08 July 2022 (2022-07-08) entire document | 1-14 |
| A | WO 2021057810 A1 (SHENZHEN DIGITAL LIFE INSTITUTE) 01 April 2021 (2021-04-01) entire document | 1-14 |
| A | WO 2022227480 A1 (SHANGHAI SHANGTANG INTELLIGENT TECHNOLOGY CO., LTD.) 03 November 2022 (2022-11-03) entire document | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 March 2025** | **27 March 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/112231**

| Patent document cited in search report | | | Publication date (day/month/year) | Patent family member(s) | | | Publication date (day/month/year) |
|---|---|---|---|---|---|---|---|
| CN | 116863752 | A | 10 October 2023 | None | | | |
| CN | 118015590 | A | 10 May 2024 | None | | | |
| CN | 114724093 | A | 08 July 2022 | None | | | |
| WO | 2021057810 | A1 | 01 April 2021 | CN | 111881705 | A | 03 November 2020 |
| WO | 2022227480 | A1 | 03 November 2022 | CN | 113111838 | A | 13 July 2021 |
| | | | | HK | 40051717 | A0 | 14 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410972892